# EUROPEAN PATENT APPLICATION

(11) **EP 4 819 211 A1**
(43) Date of publication of application: **07.10.2026**
(21) Application number: 24895491.9
(22) Date of filing: 28.05.2024
(51) Int. Cl.: H01M 4/13, H01M 4/133, H01M 10/0525

(54) **SECONDARY BATTERY AND ELECTRIC DEVICE**

(30) Priority: 30.11.2023 CN 202311641546
(71) Applicant: Contemporary Amperex Technology Co., Limited, Ningde, Fujian 352100 (CN)
(72) Inventor: WU, Kai, Ningde, Fujian 352100 (CN); LIN, Xieji, Ningde, Fujian 352100 (CN); LI, Yuanyuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2024/095839
(87) International publication number: WO 2025/112381

(57) **Abstract**

Provided are a secondary battery and an electric device. The secondary battery includes a negative electrode plate. The negative electrode plate includes a negative electrode current collector and a negative electrode film layer, the negative electrode film layer has a first surface distal to the negative electrode current collector and a second surface disposed opposite to the first surface, and a thickness of the negative electrode film layer is denoted as H. A region extending from the second surface of the negative electrode film layer to a thickness range of 0.3 H is denoted as a first region of the negative electrode film layer, the first region includes a first negative electrode active material, and the first negative electrode active material includes a first carbon-based material; a region extending from the first surface of the negative electrode film layer to the thickness range of 0.3 H is denoted as a second region of the negative electrode film layer, the second region includes a second negative electrode active material, and the second negative electrode active material includes a second carbon-based material. The first carbon-based material includes natural graphite. A total pore area S2 of an internal region of the second carbon-based material is greater than a total pore area S1 of an external region of the second carbon-based material.

## Description

### CROSS-REFERENCE TO RELATED APPLICATION

The present disclosure is presented based on Chinese Patent Application No. 202311641546.0, filed on November 30, 2023 and entitled "SECONDARY BATTERY AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to a secondary battery and an electric device.

### BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, and aerospace. Currently, as the application range of secondary batteries becomes increasingly widespread, the performance of secondary batteries faces great challenges. For electrically powered devices, for example, secondary batteries are increasingly miniaturized, are capable of achieving rapid charging and discharging, and have a longer service life. Therefore, secondary batteries are required to have higher energy density, longer cycle life, and better kinetic performance.

### SUMMARY

The present disclosure is made in view of the above issues, and its objective is to provide a secondary battery and an electric device. The secondary battery has high energy density and improved kinetic performance.

A first aspect of the present disclosure provides a secondary battery. The secondary battery includes a negative electrode plate. The negative electrode plate includes a negative electrode current collector and a negative electrode film layer located on at least one surface of the negative electrode current collector, the negative electrode film layer has a first surface distal to the negative electrode current collector and a second surface disposed opposite to the first surface, and a thickness of the negative electrode film layer is denoted as H. A region extending from the second surface of the negative electrode film layer to a thickness range of 0.3 H is denoted as a first region of the negative electrode film layer, the first region is in contact with a surface of the negative electrode current collector and includes a first negative electrode active material, and the first negative electrode active material includes a first carbon-based material; a region extending from the first surface of the negative electrode film layer to the thickness range of 0.3 H is denoted as a second region of the negative electrode film layer, the second region includes a second negative electrode active material, and the second negative electrode active material includes a second carbon-based material.

The first carbon-based material includes natural graphite.

The second carbon-based material includes an external region and an internal region located at the inner side of the external region, the external region refers to a region formed by extending from a surface of a particle of the second carbon-based material to an interior of the particle by a distance of 2.5 µm, in a cross-sectional view of the second carbon-based material, a total pore area of the external region is denoted as S1, a total pore area of the internal region is denoted as S2, and the second carbon-based material satisfies S2 > S1.

The first carbon-based material is natural graphite. Natural graphite has numerous pore structures that provide a relatively large reaction surface, which is beneficial to the reaction of active ions and results in a relatively high specific capacity. The total pore area S1 of the external region of the second carbon-based material is less than the total pore area S2 of the internal region. This means that the structure of the external region of the second carbon-based material is denser than that of the internal region, improving the stability of the material. The arrangement of the negative electrode film layer of the negative electrode plate of the secondary battery of the present disclosure in the above manner can fully exert the advantages of the first carbon-based material and the second carbon-based material, such that the secondary battery exhibits improved energy density without compromising the cycle performance.

In some embodiments, a volume distribution particle size Dv50 of the first carbon-based material is greater than a volume distribution particle size Dv50 of the second carbon-based material. The second carbon-based material is mainly located in the second region distal to the current collector, such that the smaller volume distribution particle size is beneficial to further improving the kinetic performance of the secondary battery.

In some embodiments, the volume distribution particle size Dv50 of the first carbon-based material is ≥ 16 µm. Optionally, the volume distribution particle size Dv50 of the first carbon-based material is 16 µm to 20 µm.

In some embodiments, the volume distribution particle size Dv50 of the second carbon-based material is ≤ 15 µm. Optionally, the volume distribution particle size Dv50 of the second carbon-based material is 10 µm to 15 µm.

Controlling the volume distribution particle sizes Dv50 of the first carbon-based material and the second carbon-based material within the above ranges is beneficial to improving the transport performance of active ions, thereby further improving the kinetic performance of the secondary battery.

In some embodiments, at least part of a surface of the first carbon-based material is provided with a coating layer; and/or at least part of a surface of the second carbon-based material is provided with a coating layer. The carbon coating layer can further improve the transport of active ions, which is beneficial to the kinetic performance of the secondary battery.

In some embodiments, a degree of graphitization of the first carbon-based material is ≥ 95%, and optionally, the degree of graphitization of the first carbon-based material is 95.0% to 98.0%; a degree of graphitization of the second carbon-based material is ≥ 95%, and the degree of graphitization of the second carbon-based material is 95.5% to 98.5%. The high degrees of graphitization of the first carbon-based material and the second carbon-based material, in one aspect, enable the negative electrode active material to exhibit a relatively high specific capacity, and in another aspect, are beneficial to improving electron transport in the negative electrode film layer, such that the secondary battery achieves both improved kinetic performance and excellent energy density.

In some embodiments, the degree of graphitization of the first carbon-based material is less than the degree of graphitization of the second carbon-based material.

In some embodiments, the second carbon-based material satisfies 1.5 ≤ S2/S1 ≤ 500, optionally 2.4 ≤ S2/S1 ≤ 450. When the second carbon-based material satisfies the above range of S2/S1, the pore structure is mainly distributed in the internal region. Therefore, side reactions between the second carbon-based material and the electrolytic solution are few, the consumption of active ions is reduced, and the cycle performance of the secondary battery can be improved.

In some embodiments, a specific surface area of the first carbon-based material is greater than a specific surface area of the second carbon-based material. Optionally, the specific surface area BET of the first carbon-based material is ≤ 2.2 m²/g. More optionally, the specific surface area BET of the first carbon-based material is 1.8 m²/g to 2.2 m²/g. Optionally, the specific surface area BET of the second carbon-based material is ≤ 2.1 m²/g. More optionally, the specific surface area BET of the second carbon-based material is 1.3 m²/g to 2.0 m²/g. When the specific surface areas of the first carbon-based material and the second carbon-based material are within the above ranges, it is beneficial to maintaining both the kinetic performance and the cycle performance. In particular, the smaller specific surface area of the second carbon-based material, which is mainly located in the second region of the negative electrode plate distal to the current collector, can relatively reduce side reactions with the electrolytic solution, thereby being beneficial to the cycle performance.

In some embodiments, based on the total weight of the negative electrode film layer, the amount of the second carbon-based material is ≥ 30 wt%, optionally 50 wt% to 70 wt%. When the mass proportion of the second carbon-based material in the negative electrode film layer is within the above range, the secondary battery can achieve improved kinetic performance while having excellent energy density, without compromising the cycle performance.

In some embodiments, a specific capacity of the first carbon-based material is ≥ 355 mAh/g. Optionally, the specific capacity of the first carbon-based material is 358 mAh/g to 367 mAh/g. When the specific capacity of the first carbon-based material is within the above range, the secondary battery can achieve a relatively high energy density.

In some embodiments, the second carbon-based material satisfies at least one of the following:
(1) A volume distribution particle size Dv90 of the second carbon-based material is ≤ 25 µm, optionally 18 µm to 25 µm.
(2) The particle size distribution [(Dv90)-(Dv10)]/(Dv50)] of the second carbon-based material is ≤ 1.30. Optionally, the particle size distribution [(Dv90)-(Dv10)]/(Dv50)] of the second carbon-based material is 1.05 to 1.25. When the particle size distribution of the first carbon-based material is within the above range, the particle packing efficiency of the carbon-based material is relatively good, which is beneficial to improving the compaction density of the negative electrode film layer, thereby improving the energy density of the secondary battery. In addition, it is also beneficial to forming proper pore channel structures between the particles of the negative electrode film layer, thereby improving the transport performance for active ions and electrons, and further improving the kinetic performance of the secondary battery.
(3) A specific capacity of the second carbon-based material is ≥ 358 mAh/g. Optionally, the specific capacity of the second carbon-based material is 360 mAh/g to 370 mAh/g. When the specific capacity of the second carbon-based material is within the above range, the secondary battery can achieve a relatively high energy density.
(4) An area of a pore structure in the external region of the second carbon-based material is less than or equal to 0.15 µm², optionally less than or equal to 0.13 µm². The second carbon-based material having such a structure has a relatively dense external region, such that the entry of the electrolytic solution into the interior of the particles is reduced, and side reactions with the electrolytic solution are thus reduced, which is beneficial to the storage performance of the secondary battery.
(5) The internal region of the second carbon-based material includes one or more pore structures with a pore area greater than or equal to 0.15 µm². Optionally, the second carbon-based material includes one or more pore structures with a pore area of 0.15 µm² to 2.0 µm². By configuring the internal region of the second carbon-based material to include the pore structure of the above size, in one aspect, a sufficient and stable expansion space can be reserved for the volume change of the particles of the first carbon-based material; in another aspect, the compaction density of the negative electrode film layer can also be improved, thereby improving the energy density of the secondary battery.

In some embodiments, the first negative electrode active material and/or the second negative electrode active material further includes a silicon-based material. Optionally, the silicon-based material accounts for ≤ 10 %wt% of the first negative electrode active material; and/or, the silicon-based material accounts for ≤ 10 wt% of the second negative electrode active material. Optionally, the mass proportion of the silicon-based material in the first negative electrode active material is greater than the mass proportion of the silicon-based material in the second negative electrode active material.

In some embodiments, the negative electrode film layer satisfies at least one of the following:
(1) A compaction density of the negative electrode film layer is ≤ 1.85 g/cm³. Optionally, the compaction density of the negative electrode film layer is 1.55 g/cm³ to 1.85 g/cm³.
(2) An areal density of the negative electrode film layer is ≥ 6.0 mg/cm². Optionally, the areal density of the negative electrode film layer is 7.0 mg/cm² to 15.0 mg/cm².
(3) A porosity of the negative electrode film layer is 18.0% to 36.7%, and optionally, the porosity of the negative electrode film layer is 19.0% to 34.0%. Therefore, this is beneficial to enabling the negative electrode film layer to achieve both high capacity and suitable pore channel structure, thereby facilitating the secondary battery in achieving both high energy density and good storage performance and kinetic performance.
(4) A thickness of the negative electrode film layer is ≥ 60 µm. Optionally, the thickness of the negative electrode film layer is 70 µm to 130 µm.

A second aspect of the present disclosure further provides an electric device. The electric device includes the secondary battery according to the first aspect of the present disclosure.

The electric device of the present disclosure includes the secondary battery according to the present disclosure and thus has at least the same advantages as the secondary battery.

### BRIEF DESCRIPTION OF THE DRAWINGS

FIG. 1 is a schematic diagram of an embodiment of a negative electrode plate according to the present disclosure.
FIG. 2 is a schematic diagram of another embodiment of a negative electrode plate according to the present disclosure.
FIG. 3 is a schematic diagram of yet another embodiment of a negative electrode plate according to the present disclosure.
FIG. 4 is an ion-polished cross-sectional (CP) image of an embodiment of a second carbon-based material according to the present disclosure.
FIG. 5 is a schematic diagram of a cross-sectional image of a particle of a second carbon-based material according to the present disclosure.
FIG. 6 is a schematic diagram of a battery cell according to an embodiment of the present disclosure.
FIG. 7 is an exploded view of the battery cell according to an embodiment of the present disclosure shown in FIG. 6.
FIG. 8 is a schematic diagram of a battery module according to an embodiment of the present disclosure.
FIG. 9 is a schematic diagram of a battery pack according to an embodiment of the present disclosure.
FIG. 10 is an exploded view of the battery pack according to an embodiment of the present disclosure shown in FIG. 9.
FIG. 11 is a schematic diagram of an electric device using a secondary battery as a power source according to an embodiment of the present disclosure.

### Description of the reference numerals:

1 battery pack; 2 upper case body; 3 lower case body; 4 battery module; 5 battery cell; 51 housing; 52 electrode assembly; 53 top cover assembly; 10 negative electrode plate; 101 negative electrode current collector; 102 negative electrode film layer; 102a first surface; 102b second surface; 1021 first region; 1022 second region; 1023 middle region; 200 second carbon-based material; 201 external region; 202 internal region.

### DETAILED DESCRIPTION

Hereinafter, the embodiments of the secondary battery and the electrical device of the present disclosure are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present disclosure and are not intended to limit the subject matter recited in the claims.

The "ranges" disclosed in the present disclosure are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present disclosure, unless otherwise specified, the numerical range "a to b" indicates an abbreviated representation of any combination of real numbers between a and b, where both a and b are real numbers. For example, the numerical range "0 to 5" indicates that all real numbers between "0 to 5" are listed herein, and "0 to 5" is merely an abbreviated representation of a combination of these numerical values. In addition, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present disclosure may be combined with one another to form new technical solutions.

Unless otherwise specified, all technical features and optional technical features of the present disclosure may be combined with one another to form new technical solutions.

Unless otherwise specified, all steps of the present disclosure can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b) and (c), or steps (a), (c) and (b), or steps (c), (a) and (b), or the like.

Natural graphite has a relatively high specific capacity, but it has a large number of surface defects and internal pores. In the charging and discharging cycles, the natural graphite is prone to undergoing side reactions with an electrolytic solution and is prone to expansion, resulting in a poor cycle life. Therefore, attempts have been made to use two different negative electrode active materials to coat an upper layer and a lower layer of a negative electrode film layer, respectively. Natural graphite is disposed on the lower layer, and a material with good cycle performance, such as artificial graphite, is disposed on the upper layer. However, the artificial graphite has a relatively low specific capacity, resulting in insufficient energy density of secondary batteries.

Therefore, it is difficult for current secondary batteries to achieve both high energy density and good cycle performance.

Based on this, a first aspect of the present disclosure provides a secondary battery having relatively high energy density and good cycle performance.

The term "secondary battery" described herein refers to a battery cell, a battery module, or a battery pack.

Typically, a secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. The electrolyte functions to conduct ions between the positive electrode plate and the negative electrode plate. The separator is disposed between the positive electrode plate and the negative electrode plate to primarily prevent the positive and negative electrodes from short-circuiting while allowing the passage of ions.

### [Negative Electrode Plate]

The secondary battery includes a negative electrode plate. The negative electrode plate includes a negative electrode current collector and a negative electrode film layer located on at least one surface of the negative electrode current collector, the negative electrode film layer has a first surface distal to the negative electrode current collector and a second surface disposed opposite to the first surface, and the thickness of the negative electrode film layer is denoted as H. A region extending from the second surface of the negative electrode film layer to a thickness range of 0.3 H is denoted as a first region of the negative electrode film layer, the first region is proximal to the negative electrode current collector and includes a first negative electrode active material, and the first negative electrode active material includes a first carbon-based material; a region extending from the first surface of the negative electrode film layer to the thickness range of 0.3 H is denoted as a second region of the negative electrode film layer, the second region is distal to a surface of the negative electrode current collector and includes a second negative electrode active material, and the second negative electrode active material includes a second carbon-based material. The first carbon-based material includes natural graphite; the second carbon-based material includes an external region and an internal region located at the inner side the external region, the external region refers to a region formed by extending from the surface of a particle of the second carbon-based material to the interior of the particle by a distance of 2.5 µm, in a cross-sectional view of the second carbon-based material, the total pore area of the external region is denoted as S1, the total pore area of the internal region is denoted as S2, and the second carbon-based material satisfies S2 > S1.

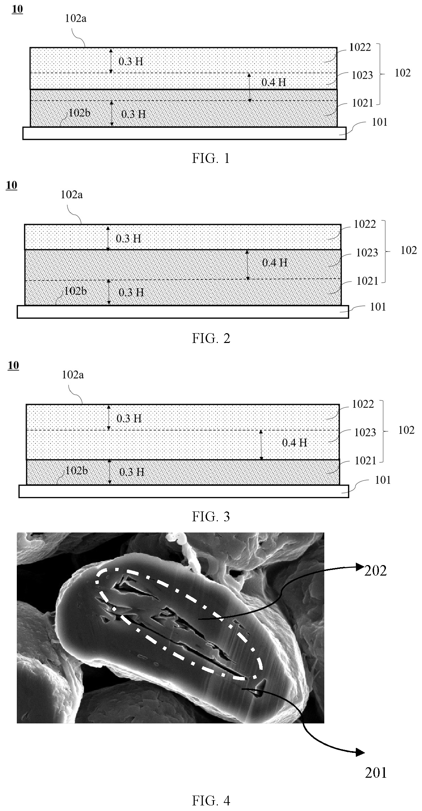

Referring to FIGs. 1 to 3, schematic diagrams of several different specific embodiments of a negative electrode plate of the present disclosure are illustrated. As shown in FIGs. 1 to 3, the negative electrode plate 10 includes a negative electrode current collector 101 and a negative electrode film layer 102 formed on at least one surface of the negative electrode current collector 101. The negative electrode film layer 102 has a first surface 102a distal to the negative electrode current collector 101 and a second surface 102b disposed opposite to the first surface 102a. The thickness of the negative electrode film layer 102 is denoted as H. The thickness H of the negative electrode film layer refers to the thickness of the negative electrode film layer located on a single side of the negative electrode current collector. A region extending from the second surface 102b of the negative electrode film layer to a thickness range of 0.3 H is denoted as a first region 1021 of the negative electrode film layer. The first region 1021 is proximal to the negative electrode current collector 101, and is also referred to as the lower layer of the negative electrode film layer herein. A region extending from the first surface 102a of the negative electrode film layer to a thickness range of 0.3 H is denoted as a second region 1022 of the negative electrode film layer. The second region 1022 is distal to the negative electrode current collector 101, and is also referred to as an upper layer of the negative electrode film layer herein. The first region 1021 includes a first negative electrode active material, the first negative electrode active material includes a first carbon-based material, and the first carbon-based material has a pore structure. The second region 1022 includes a second negative electrode active material, and the second negative electrode active material includes a second carbon-based material. Between the first region 1021 and the second region 1022, a region that occupies a thickness range of 0.4 H is denoted as a middle region 1023. It is easy to understand that according to FIGs. 1 to 3, the middle region 1023 includes at least one of the first carbon-based material and the second carbon-based material.

It should be understood that in the embodiments shown in FIGs. 1 to 3, the second surface 102b is in contact with the upper surface of the negative electrode current collector 101. However, the structure of the negative electrode plate of the present disclosure is not limited thereto. For example, an additional layer may be present between the negative electrode film layer 102 and the negative electrode current collector 101. In this case, the second surface 102b is not in direct contact with the negative electrode current collector 101.

Specifically, FIGs. 1 to 3 illustrate that the first carbon-based material and the second carbon-based material are sequentially applied onto the negative electrode current collector 101. FIG. 1 illustrates that the thickness of each of the first carbon-based material and the second carbon-based material accounts for about half of the thickness of the negative electrode film layer 102. FIG. 2 illustrates that the thickness of the first carbon-based material accounts for about 70% of the thickness of the negative electrode film layer 102, and the thickness of the second carbon-based material accounts for about 30% of the thickness of the negative electrode film layer 102. FIG. 3 illustrates a reverse configuration of FIG. 2; that is, the thickness of the second carbon-based material accounts for about 70% of the thickness of the negative electrode film layer 102, and the thickness of the first carbon-based material accounts for about 30% of the thickness of the negative electrode film layer 102.

It should be understood that FIGs. 1 to 3 are schematic diagrams under ideal cases. The present disclosure does not particularly limit the ratio of the thickness of the first carbon-based material to the thickness of the second carbon-based material. For example, the ratio may be in a range of 3:7 to 7:3. Illustratively, the ratio of the thickness of the first carbon-based material to the thickness of the second carbon-based material is 4:6, 5:5, 6:4, or the like, or a ratio between any two of the ratios.

It should also be understood that the middle region 1023 in FIGs. 1 to 3 exhibits distinct boundaries between the other two regions, while in practice, there is no such distinct interface. As previously described, within the range of the middle region 1023, there may be both the first carbon-based material and the second carbon-based material. Similarly, there is no distinct interface between a coating containing the first carbon-based material and a coating containing the second carbon-based material.

In the present disclosure, the total pore area S1 of the external region of the second carbon-based material is less than the total pore area S2 of the internal region. This means that the structure of the external region of the first carbon-based material is denser than that of the internal region. Additionally, the first carbon-based material in the present disclosure satisfying "S1 > S2" means that the second carbon-based material has a pore structure that can be directly observed from a cross-sectional image (e.g., a scanning electron microscope image with 1000-fold magnification). That is, the external region in the main body structure of the second carbon-based material has a relatively small pore area.

The first carbon-based material and the second carbon-based material can be distinguished by a cross-section polisher. For example, the types of the first carbon-based material and the second carbon-based material may be distinguished by performing an ion-polished cross-sectional morphology (CP) test on the negative electrode plate. As an example, the test method may be as follows: The negative electrode plate is cut into samples to be tested with a certain size (e.g., 2 cm × 2 cm), and the negative electrode plate is fixed on a sample stage using paraffin. The sample stage is placed into a sample holder and locked in place, and an argon ion cross-section polisher (e.g., the IB-09010 CP argon ion cross-section polisher from JEOL Ltd., Japan) is turned on and evacuated (e.g., 10 Pa to 4 Pa). After setting the argon flow (e.g., 0.15 MPa), voltage (e.g., 8 KV), and polishing time (e.g., 2 h), the sample stage is adjusted to an oscillation mode to begin polishing. A region of the sample to be tested is randomly selected for scanning (e.g., scanning using a scanning electron microscope with reference to JY/T010-1996), and the ion-polished cross-sectional morphology (CP) image of the negative electrode plate is acquired at a certain magnification (e.g., 1000-fold). The first carbon-based material and the second carbon-based material can be distinguished from the image. FIG. 4 is an ion-polished cross-sectional (CP) image of a second carbon-based material according to the present disclosure. It can be seen from the figure that the external region of the particle of the second carbon-based material is denser than the internal region, satisfying S2 > S1.

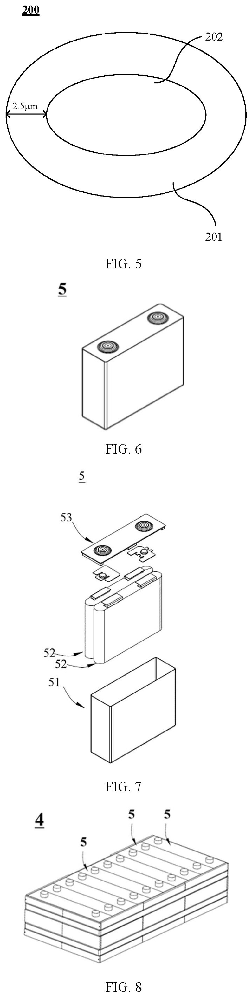

Further referring to FIG. 5, a schematic diagram of a cross-sectional image of a particle of a second carbon-based material 200 of the present disclosure is illustrated, and the cross-sectional image passes through the center of the particle of the second carbon-based material 200. As shown in FIG. 5, the region formed by extending from the surface of the particle of the second carbon-based material 200 to the interior of the particle by a distance of 2.5 µm is an external region 201, and the region of the particle 200 other than the external region 201 is an internal region 202.

In the design of the electrode plate of the present disclosure, the first region (lower layer region) of the negative electrode film layer is made of the first carbon-based material, and the second region (upper layer region) is made of the second carbon-based material. The first carbon-based material is natural graphite. The natural graphite has a relatively high specific capacity, which can contribute to the energy density of the secondary battery. Additionally, natural graphite has a relatively high powder compaction density, which can further improve the energy density of the battery. When the first carbon-based material is disposed in the first region of the negative electrode film layer, the energy density of the secondary battery can be improved, and the adverse effect on the cycle performance of the battery can be reduced to a certain extent. The total pore area S2 of the internal region of the particle of the second carbon-based material is larger than the total pore area S1 of the external region. In one aspect, the second carbon-based material with such a structure has a high specific capacity, which can improve the energy density of the battery. In another aspect, the pore structure with a smaller area in the external region of the second carbon-based material is beneficial to the stability of the particle and to reducing side reactions with the electrolytic solution, thereby providing a better cycle life.

Therefore, by providing the second carbon-based material disposed in the second region of the negative electrode film layer and the first carbon-based material disposed in the first region of the negative electrode film layer, the secondary battery achieves improved energy density and maintains the cycle performance to a certain extent.

According to some embodiments, the second carbon-based material satisfies 1.5 ≤ S2/S1 ≤ 500, optionally 2.4 ≤ S2/S1 ≤ 450. Illustratively, S2/S1 may fall within the following ranges: 2.2 ≤ S₂/S₁ ≤ 400, 2.4 ≤ S₂/S₁ ≤ 300, 2.5 ≤ S₂/S₁ ≤ 250, 2.6 ≤ S₂/S₁ ≤ 200, 2.8 ≤ S₂/S₁ ≤ 150, or 3.0 ≤ S₂/S₁ ≤ 100. When the second carbon-based material satisfies S2/S1 in the above ranges, it indicates that the structure of the external region of the particle of the second carbon-based material is denser than that of the internal region. For the particle with such a structure, the internal pore structure can reserve a certain space for the expansion of the particle, thereby maintaining stability in the charging and discharging cycle, and being beneficial to the cycle performance of the secondary battery. Additionally, the external region of the particle of the second carbon-based material has fewer pores, and such a material has a relatively high specific capacity, which is also conducive to improving the energy density of the secondary battery.

In some embodiments, the volume distribution particle size Dv50 of the first carbon-based material is greater than the volume distribution particle size Dv50 of the second carbon-based material.

In some specific embodiments, the volume distribution particle size Dv50 of the first carbon-based material is ≥ 15 µm. Optionally, the volume distribution particle size Dv50 of the first carbon-based material is 16 µm to 20 µm. For example, the volume distribution particle size Dv50 of the second carbon-based material may be 16 µm, 17 µm, 17.5 µm, 18 µm, 18.5 µm, 19 µm, or 20 µm, but is not limited thereto, and may also be a value between a range formed by any two of the values.

Controlling the volume distribution particle size of the first carbon-based material within the above range is beneficial to improving the transport performance of active ions in the first region of the negative electrode film layer, thereby improving the kinetic performance of the secondary battery.

In some embodiments, the volume distribution particle size Dv50 of the second carbon-based material is ≤ 13 µm. Optionally, the volume distribution particle size Dv50 of the second carbon-based material is 7 µm to 12 µm. For example, the volume distribution particle size Dv50 of the second carbon-based material may be 7 µm, 8 µm, 9 µm, 10 µm, 11 µm, 12 µm, or 13 µm, but is not limited thereto, and may also be a value between a range formed by any two of the values.

The second carbon-based material has a smaller volume distribution particle size and may have a larger specific surface area, allowing it to react with more active ions per unit time. When the second carbon-based material is disposed in the second region (i.e., the upper layer) of the negative electrode film layer, it is beneficial to improving the kinetic performance of the secondary battery.

Therefore, when the first carbon-based material and the second carbon-based material with the particle size ranges described above are respectively disposed on the lower layer and the upper layer of the negative electrode film layer, the secondary battery can achieve both good energy density and improved kinetic performance, without compromising the cycle performance.

In some embodiments, at least part of the surface of the first carbon-based material is provided with a coating layer, optionally a carbon coating layer (e.g., an amorphous carbon coating layer). Illustratively, 80% or more of the surface, or even the entire surface of the first carbon-based material is provided with a coating layer.

In some embodiments, the entire outer surface of the second carbon-based material is provided with a coating layer, optionally a carbon coating layer (e.g., an amorphous carbon coating layer). Illustratively, 80% or more of the surface, or even the entire outer surface of the second carbon-based material is provided with a coating layer.

When at least part of the surface of the first carbon-based material and/or the second carbon-based material is provided with a coating layer, it is more beneficial to the transport of active ions, and is thus beneficial to further improving the kinetic performance of the secondary battery.

The first carbon-based material of the present disclosure is natural graphite, and particles of the natural graphite generally have numerous pore structures in the entire region. For example, if the particle of natural graphite is also divided into an internal region and an external region (a region extending from the surface of the particle of natural graphite to the interior of the particle by a distance of 2.5 µm is the external region), both the internal region and the external region of the natural graphite have numerous pore structures.

In some embodiments, the degree of graphitization of the first carbon-based material is ≥ 95%, optionally 95.0% to 98.0%. Illustratively, the degree of graphitization of the first carbon-based material is 95%, 96%, 96.5%, 97%, 97.5%, 98%, or the like, or a value between a range formed by any two of the values. In some embodiments, the degree of graphitization of the second carbon-based material is ≥ 95%, optionally 95.5% to 98.5%. Illustratively, the degree of graphitization of the first carbon-based material is 95.5%, 96%, 96.5%, 97%, 97.5%, 98%, 98.5%, or the like, or a value between a range formed by any two of the values. The high degree of graphitization of the first carbon-based material and/or the second carbon-based material can provide excellent specific capacity and powder compression density, thereby effectively improving the energy density of the secondary battery.

In some embodiments, the degree of graphitization of the first carbon-based material is less than the degree of graphitization of the second carbon-based material.

In some embodiments, the specific surface area of the first carbon-based material is greater than the specific surface area of the second carbon-based material.

In some embodiments, the specific surface area of the first carbon-based material is ≤ 2.2 m²/g, optionally 1.8 m²/g to 2.2 m²/g. Illustratively, the specific surface area of the first carbon-based material is 1.8 m²/g, 1.9 m²/g, 2.0 m²/g, 2.1 m²/g, 2.2 m²/g, or a value between any two of the values. In some embodiments, the specific surface area of the second carbon-based material is ≤ 2.1 m²/g, optionally 1.3 m²/g to 2.0 m²/g. Illustratively, the specific surface area of the second carbon-based material is 1.3 m²/g, 1.4 m²/g, 1.5 m²/g, 1.6 m²/g, 1.7 m²/g, 1.8 m²/g, 1.9 m²/g, 2.0 m²/g, or a value between any two of the values.

The first carbon-based material is natural graphite, which generally has a relatively large specific surface area. By adjusting the first carbon-based material to have a relatively low specific surface area, the reactivity of the material can be reduced, the occurrence of side reactions is reduced, and the consumption of active ions due to the formation of SEI film is reduced, which is beneficial to the initial coulombic efficiency of the secondary battery and can reduce the adverse effect on the cycle performance.

In some embodiments, the mass proportion of the second carbon-based material in the negative electrode active material is ≥ 30%, optionally 50% to 70%. Illustratively, the mass proportion of the second carbon-based material in the negative electrode active material is 30%, 40%, 50%, 55%, 60%, 65%, 70%, or the like, or a value between any two of the values. When the mass proportion of the second carbon-based material in the negative electrode active material is within the above range, the kinetic performance of the secondary battery can be effectively improved, and it is beneficial to the energy density, without compromising the cycle performance.

According to some embodiments, the negative electrode active material is composed of the first carbon-based material and the second carbon-based material. In the negative electrode active material, the mass proportion of the first carbon-based material is less than or equal to 70%, optionally 30% to 50%.

When the mass proportions of the first carbon-based material and the second carbon-based material in the negative electrode active material are within the above ranges, the respective advantages of the materials can be jointly exerted, such that the secondary battery can achieve improved kinetic performance while having excellent energy density, without compromising the cycle performance.

According to some embodiments, the first carbon-based material further satisfies a specific capacity ≥ 355 mAh/g. Optionally, the specific capacity of the first carbon-based material is 358 mAh/g to 367 mAh/g. Illustratively, the specific capacity of the first carbon-based material is 358 mAh/g, 360 mAh/g, 362 mAh/g, 365 mAh/g, 367 mAh/g, or a value between any two of the values. When the specific capacity of the first carbon-based material is within the above range, the secondary battery can achieve a relatively high energy density.

In some embodiments, the second carbon-based material further satisfies at least one of the following properties, thereby improving one or more of the following properties of the secondary battery: kinetic performance, cycle performance, energy density, and the like.

The volume distribution particle size Dv90 of the second carbon-based material is ≤ 25 µm. Optionally, the volume distribution particle size Dv90 of the second carbon-based material is 18 µm to 25 µm. Illustratively, the volume distribution particle size Dv90 of the second carbon-based material is 18 µm, 20 µm, 22 µm, 24 µm, 25 µm, or a value between a range formed by any two of the values. The smaller volume distribution particle size Dv90 of the second carbon-based material may be further beneficial to the kinetic performance of the secondary battery.

The particle size distribution [(Dv90)-(Dv10)]/(Dv50)] of the second carbon-based material is ≤ 1.30. Optionally, the particle size distribution [(Dv90)-(Dv10)]/(Dv50)] of the second carbon-based material is 1.05 to 1.25. Illustratively, the particle size distribution [(Dv90)-(Dv10)]/(Dv50)] of the second carbon-based material is 1.05, 1.10, 1.15, 1.20, 1.25, 1.30, or a value between a range formed by any two of the values. When the particle size distribution of the second carbon-based material is within the above range, the particle packing efficiency of the second carbon-based material is relatively good, which is beneficial to improving the compaction density of the negative electrode film layer, thereby improving the energy density of the secondary battery. In addition, the particle size distribution range described above also facilitates the formation of proper pore channel structures between the particles of the negative electrode film layer, which improves the transport performance of active ions and is beneficial to the kinetic performance of the secondary battery.

The specific capacity of the second carbon-based material is ≥ 358 mAh/g. Optionally, the specific capacity of the second carbon-based material is 360 mAh/g to 370 mAh/g. Illustratively, the specific capacity of the second carbon-based material is 360 mAh/g, 362 mAh/g, 364 mAh/g, 366 mAh/g, 367 mAh/g, 368 mAh/g, 370 mAh/g, or a value between any two of the values. When the specific capacity of the second carbon-based material is within the above range, the energy density of the secondary battery can be improved.

The area of the pore structure in the external region of the second carbon-based material is less than or equal to 0.15 µm², optionally less than or equal to 0.13 µm². The second carbon-based material having such a structure has a relatively dense external region, such that the entry of the electrolytic solution into the interior of the particles is reduced, and side reactions with the electrolytic solution are thus reduced, which is beneficial to the storage performance of the secondary battery.

The internal region of the second carbon-based material includes one or more pore structures with a pore area ≥ 0.15 µm². Optionally, the second carbon-based material includes one or more pore structures with a pore area of 0.15 µm² to 2.0 µm². Since the internal region of the second carbon-based material includes the pore structure of the above size, in one aspect, a sufficient and stable expansion space can be reserved for the volume change of the particles of the second carbon-based material; in another aspect, the compaction density of the negative electrode film layer can also be improved, thereby improving the cycle performance and energy density of the secondary battery.

In some embodiments, the first negative electrode active material in the negative electrode film layer of the negative electrode plate is composed of the first carbon-based material; and the second negative electrode active material is composed of the second carbon-based material.

In some other embodiments, the negative electrode film layer further includes other negative electrode active materials known in the art.

According to some specific embodiments, the first negative electrode active material and/or the second negative electrode active material further includes a silicon-based material. The silicon-based material can function to improve the pore channel structure in the negative electrode film layer, thereby facilitating the infiltration and the liquid retention of the electrolytic solution, and improving the kinetic performance of the secondary battery. In addition, the negative electrode capacity can also be improved, thereby further improving the energy density of the secondary battery.

In particular, the silicon-based material may be selected from at least one of elemental silicon, a silicon-oxygen compound, a silicon-carbon composite, a silicon-nitrogen composite, and a silicon alloy.

When the silicon-based material is included, the mass proportion of the silicon-based material in the first negative electrode active material is ≤ 10%; and/or the mass proportion of the silicon-based material in the second negative electrode active material is ≤ 10%. Illustratively, the mass proportion of the silicon-based material in the negative electrode active materials may be 3% to 10%, 3% to 8%, 5% to 10%, or the like. When the silicon-based material is within the above ranges, the high expansion characteristic of the silicon-based material does not adversely affect the cycle life of the secondary battery, and meanwhile, the capacity density of the secondary battery can be improved.

In some embodiments, the mass proportion of the silicon-based material in the first negative electrode active material is greater than the mass proportion of the silicon-based material in the second negative electrode active material.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes other auxiliary agents, such as a thickener (e.g., sodium carboxymethylcellulose (CMC-Na)).

The type and amount of the conductive agent, the binder, and other auxiliary agents described above, if any, are not particularly limited in the present disclosure, and may be selected and determined by those of ordinary skill in the art according to actual needs.

In some embodiments, the negative electrode film layer further satisfies at least one of the following properties, being beneficial to one or more of the following properties of the secondary battery: kinetic performance, cycle performance, energy density, and the like.

In some embodiments, the compaction density of the negative electrode film layer is ≤ 1.85 g/cm³. Optionally, the compaction density of the negative electrode film layer is 1.55 g/cm³ to 1.85 g/cm³. For example, the compaction density of the negative electrode film layer is 1.55 g/cm³, 1.60 g/cm³, 1.65 g/cm³, 1.70 g/cm³, 1.75 g/cm³, 1.80 g/cm³, 1.85 g/cm³, or the like, but it is not limited thereto, and may also be a value between a range formed by any two of the values.

In some embodiments, the areal density of the negative electrode film layer is ≥ 6.0 mg/cm². Optionally, the areal density of the negative electrode film layer is 7.0 mg/cm² to 15.0 mg/cm². For example, the compaction density of the negative electrode film layer is 6.0, 7.0, 8.0, 9.0, 10.0, 11.0, 12.0, 13.0, 14.0, 15.0, or the like, but is not limited thereto, and may also be a value between a range formed by any two of the values.

In some embodiments, the porosity of the negative electrode film layer is 18.0% to 36.7%. Optionally, the porosity of the negative electrode film layer is 19.0% to 34.0%. Therefore, this is beneficial to enabling the negative electrode film layer to achieve both high capacity and suitable pore channel structure, thereby facilitating the secondary battery in achieving both high energy density and kinetic performance.

In some embodiments, the thickness of the negative electrode film layer is ≥ 60 µm. Optionally, the thickness of the negative electrode film layer is 70 µm to 130 µm. For example, the thickness of the negative electrode film layer is 70 µm, 80 µm, 90 µm, 100 µm, 110 µm, 120 µm, 130 µm, or the like, or a value between a range formed by any two of the values.

In some embodiments, a metal foil or a composite current collector may be used as the negative electrode current collector. For example, as the metal foil, a copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), and polyethylene (PE)).

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry; and coating the negative electrode current collector with the negative electrode slurry, and performing drying, cold pressing, and other processes, such that the negative electrode plate can be obtained.

The negative electrode current collector has two surfaces opposite to each other in its own thickness direction, and the negative electrode film layer is disposed on any one or both of the two opposite surfaces of the negative electrode current collector. It should be noted that the parameters of the negative electrode film layer provided in the present disclosure (e.g., compaction density, areal density, porosity, OI value, and thickness) refer to the parameters of the negative electrode film layer on a single side of the negative electrode current collector. When the negative electrode film layer is disposed on both sides of the negative electrode current collector, if the parameters of the negative electrode film layer on either side meet the requirements of the present disclosure, it shall be considered to fall within the protection scope of the present disclosure.

In the present disclosure, the above negative electrode plate does not exclude other additional functional layers other than the above negative electrode film layer. For example, in some embodiments, the negative electrode plate further includes a conductive bottom coating (e.g., composed of a conductive agent and a binder) interposed between the above negative electrode current collector and the above negative electrode film layer and disposed on the surface of the above negative electrode current collector. In some embodiments, the negative electrode plate further includes a protective layer covering the surface of the above negative electrode film layer.

In the present disclosure, for the ratio S2/S1 of the total pore area S₂ of the internal region to the total pore area S₁ of the external region of the material (e.g., the second carbon-based material), a cross-section of the carbon-based material is acquired using a cross-section polisher (e.g., the IB-09010 CP argon ion cross-section polisher from JEOL Ltd., Japan); then, with reference to JY/T010-1996, the cross-section of the carbon-based material is scanned using a scanning electron microscope (e.g., the Sigma 300 scanning electron microscope from ZEISS, Germany); finally, the pore area of any one pore in the carbon-based material, the total pore area S₁ of the external region, and the total pore area S₂ of the internal region are acquired using image processing software (e.g., AVIZO), thereby obtaining the value of S2/S1. Illustratively, samples may be obtained from different regions of the negative electrode plate in the secondary battery, and at least 5 (e.g., 5, 10, 15, or even more) positions are randomly selected from the sample to acquire the cross-sections using a cross-section polisher. The cross-sections of at least 10 particles (e.g., 10, 20, 50, or even more particles) are randomly selected from scanning electron microscope images of the cross-sections, and the total pore area S2' of the internal region and the total pore area S1' of the external region of each particle cross-section are acquired by using image processing software according to the above definition, thereby obtaining the value of S2'/S1' of each particle cross-section. The arithmetic mean value of S2'/S1' of all measured particle cross-sections is calculated as the S2/S1 value of the first carbon-based material.

In the present disclosure, the volume distribution particle sizes Dv10, Dv50, and Dv90 of the material (e.g., the first carbon-based material or the second carbon-based material) have meanings well known in the art, which respectively represent the particle sizes corresponding to the cumulative volume distribution percentages of the material reaching 10%, 50%, and 90%, and can be measured using instruments and methods known in the art. For example, a laser particle size analyzer may be used for the measurement with reference to GB/T 19077-2016. The test instrument may be the Mastersizer 3000 laser particle size analyzer from Malvern Instruments Ltd., UK.

In the present disclosure, whether the coating layer is present on the surface of the material (e.g., the first carbon-based material or the second carbon-based material) can be determined by a transmission electron microscope.

In the present disclosure, the degree of graphitization of the material (e.g., the first carbon-based material or the second carbon-based material) has a meaning well known in the art and can be measured using instruments and methods known in the art. For example, an X-ray diffractometer (e.g., Bruker D8 Discover) may be used for the measurement. The measurement may be performed with reference to JIS K 0131-1996 and JB/T 4220-2011 to obtain the average interlayer spacing d₀₀₂ of the C(002) crystal plane in the crystal structure of the material, and then the degree of graphitization is calculated according to the formula g = (0.344 - d₀₀₂)/(0.344 - 0.3354) × 100%. In the above formula, d₀₀₂ is the average interlayer spacing of the C(002) crystal plane in the crystal structure of the material in nanometers (nm).

In the present disclosure, the specific surface area of the material (e.g., the first carbon-based material or the second carbon-based material) has a meaning well known in the art and can be measured using instruments and methods known in the art. For example, the specific surface area of the material can be measured using the analysis and test method of specific surface area by nitrogen adsorption with reference to GB/T 19587-2017, and calculated by the Brunauer Emmett Teller (BET) method. The test instrument may be the Tri-Star 3020 specific surface area pore size analysis tester from Micromeritics, USA.

In the present disclosure, the tap density of the material (e.g., the first carbon-based material or the second carbon-based material) has a meaning well known in the art and can be measured using instruments and methods known in the art. For example, a powder tap density tester may be used for the measurement with reference to GB/T 5162-2006. The test instrument may be the Bettersize BT-301, with the following test parameters: vibration frequency of 250 ± 15 times/minute, amplitude of 3 ± 0.2 mm, total vibrations of 5000 times, and graduated cylinder volume of 25 mL.

In the present disclosure, the specific capacity of the material (e.g., the first carbon-based material or the second carbon-based material) has a meaning well known in the art and can be determined using methods known in the art. An exemplary determination method is as follows: The sample powder, a conductive agent carbon black (Super P), and a binder polyvinylidene fluoride (PVDF) are mixed uniformly in a mass ratio of 91.6:1.8:6.6 in a solvent N-methylpyrrolidone (NMP) to obtain a slurry; the prepared slurry is applied to a surface of a negative electrode current collector copper foil and dried in an oven for later use; ethylene carbonate (EC), ethyl methyl carbonate (EMC), and diethyl carbonate (DEC) are mixed in a volume ratio of 1:1:1 to obtain an organic solvent, and then LiPF₆ is dissolved in the above organic solvent to prepare an electrolytic solution with a concentration of 1 mol/L; then, a CR2430 button battery is assembled using the electrolytic solution in an argon-protected glove box with a metallic lithium foil as the counter electrode and a polyethylene (PE) thin film as the separator; the obtained button battery is left to stand for 12 h, then discharged at a constant current of 0.05C to 0.005 V at 25 °C, left to stand for 10 min, then discharged at a constant current of 50 µA to 0.005 V, left to stand for 10 min, and then discharged at a constant current of 10 µA to 0.005 V, and then charged at a constant current of 0.1C to 2 V, and the charge capacity is recorded. The ratio of the charge capacity to the mass of the sample is defined as the specific capacity of the corresponding material (e.g., the first carbon-based material or the second carbon-based material).

In the present disclosure, the compaction density of the negative electrode film layer has a meaning well known in the art and can be measured using methods known in the art. The compaction density of the negative electrode film layer = the areal density of the negative electrode film layer/the thickness of the negative electrode film layer.

In the present disclosure, the areal density of the negative electrode film layer has a meaning well known in the art and can be measured using methods known in the art. For example, a single-side coated and cold-pressed negative electrode plate may be used (if a double-side coated negative electrode plate is used, the negative electrode film layer on one side may be wiped off first) and punched into small circular samples with an area of S₁. The sample is weighed, and the weight is recorded as M₁. The negative electrode film layer of the above weighed negative electrode plate is then wiped off, and the weight of the negative electrode current collector is measured and recorded as M₀. The areal density of the negative electrode plate = (M₁ - M₀)/S₁.

In the present disclosure, the porosity of the negative electrode film layer has a meaning well known in the art and can be measured using methods known in the art. For example, an exemplary measurement method is as follows: A single-side coated and cold-pressed negative electrode plate is used (if a double-side coated negative electrode plate is used, the negative electrode film layer on one side may be wiped off first) and punched into small circular samples with a certain area, and the apparent volume V₁ of the negative electrode plate is calculated; with reference to GB/T24586-2009, an inert gas (e.g., helium or nitrogen) is used as the medium, and the true volume V₂ of the negative electrode plate is measured by gas displacement using a true density tester. The porosity of the negative electrode film layer = (V₁ - V₂)/V₁ × 100%. Multiple negative electrode plate samples (e.g., 30 samples) with good appearance and no powder shedding at the edges may be measured, and the mean value of the results is used as the measurement result, thereby improving the accuracy of the measurement results. The test instrument may be the Micromeritics AccuPyc II 1340 true density tester.

The thickness of the negative electrode film layer has a meaning well known in the art and can be measured using methods known in the art, for example, using a micrometer (e.g., Mitutoyo293-100, with precision of 0.1 µm). The thickness range provided in the present disclosure is the thickness range of the negative electrode film layer on one side of the negative electrode current collector. As long as the thickness of the negative electrode film layer on any side of the negative electrode current collector falls within the range provided in the present disclosure, the requirements of the present disclosure are satisfied.

In the X-ray diffraction analysis test of the present disclosure, a copper target may be used as the anode target, a CuKα ray is used as the radiation source, the ray wavelength λ = 1.5418 Å, the scanning 2θ angle range is 20° to 80°, and the scanning rate is 4°/min.

It should be noted that various parameter tests for the negative electrode active material or the negative electrode film layer described above may be performed by sampling from a prepared secondary battery according to the following steps.

The secondary battery is subjected to a discharge process (for safety reasons, the secondary battery is typically in a fully discharged state). After disassembly of the secondary battery, the negative electrode plate is extracted and immersed in dimethyl carbonate for a certain period (e.g., 2 h to 10 h). The negative electrode plate is then removed and subjected to a drying process at a certain temperature for a certain duration (e.g., 60 °C for more than 4 h). After drying, the negative electrode plate is collected. At this point, samples can be taken from the dried negative electrode plate to test the above parameters related to the negative electrode film layer, such as the areal density, compaction density, porosity, OI value, and thickness of the negative electrode film layer.

The dried negative electrode plate described above is then baked at a certain temperature for a certain duration (e.g., 400 °C for more than 2 h). From the baked negative electrode plate, a region is randomly selected, and sampling of the negative electrode active material is performed (e.g., using a blade to scrape for powder collection). The collected negative electrode active material is sieved (e.g., using a 200-mesh sieve), thereby ultimately obtaining samples that can be used to test the negative electrode active material parameters described above.

In the present disclosure, the first carbon-based material and the second carbon-based material described above are commercially available, or may also be prepared by the following method of the present disclosure.

The first carbon-based material is natural graphite. Natural graphite generally refers to graphite naturally formed in nature, which does not require graphitization, and the interior of the natural graphite particles usually contains a large number of pore structures. In some embodiments, the natural graphite includes one or more of flake graphite, natural spherical graphite, and microcrystalline graphite, and particularly includes natural spherical graphite.

The "natural spherical graphite" refers to natural graphite having a spherical or spheroidal shape, and not all natural graphite particles are controlled to be ideal spheres. In some embodiments, flake graphite may be pretreated to obtain natural spherical graphite with a desired particle size and desired morphology. Optionally, the above pretreatment includes processes such as crushing, classification, spheroidization, and purification.

In some embodiments, the first carbon-based material may be selected from natural spherical graphite, natural flake graphite, or the like. In some embodiments, the raw material may be pretreated to obtain natural spherical graphite with a desired particle size and desired morphology, and optionally, the pretreatment described above includes processes such as crushing, classification, spheroidization, and purification, to obtain the first carbon-based material with the above characteristics.

In some embodiments, the first carbon-based material is coated using an organic carbon source to form a carbon coating layer on at least part of the surface of the first carbon-based material. The organic carbon source may be a carbon-containing material known in the art that is suitable for coating, and may include, for example, one or more of coal pitch, petroleum pitch, phenolic resin, coconut shell, and the like. The carbonization temperature is 900 °C to 1200 °C.

In some embodiments, the preparation method for the second carbon-based material includes: step 1, providing a raw material having a plurality of pore structures; step 2, uniformly mixing the above raw material and a filling material according to a predetermined proportion, holding the mixture at a first temperature T₁ for a first duration t₁, and then cooling the mixture to room temperature to obtain an intermediate; and step 3, holding the obtained intermediate at a second temperature T₂ for a second duration t₂, so as to obtain the second carbon-based material.

In some embodiments, in step 1, the raw material used for preparing the second carbon-based material includes natural graphite. Optionally, the natural graphite includes one or more of flake graphite, natural spherical graphite, and microcrystalline graphite, and particularly includes natural spherical graphite.

The "natural spherical graphite" refers to natural graphite having a spherical or spheroidal shape, and not all natural graphite particles are controlled to be ideal spheres. In some embodiments, flake graphite may be pretreated to obtain natural spherical graphite with a desired particle size and desired morphology. Optionally, the above pretreatment includes processes such as crushing, classification, spheroidization, and purification.

In some embodiments, in step 1, the volume distribution particle size Dv50 of the above raw material may be 6 µm to 13 µm.

In some embodiments, in step 1, the specific surface area of the above raw material may be ≥ 2.5 m²/g, optionally 2.5 m²/g to 10.0 m²/g. When the specific surface area of the raw material is within the above range, it is beneficial to performing subsequent filling treatment and obtaining the second carbon-based material with the required specific surface area, and it is also beneficial for the second carbon-based material to simultaneously possess high capacity and high initial coulombic efficiency. In addition, it is also beneficial for the second carbon-based material to achieve better kinetic performance.

In some embodiments, in step 2, the softening point temperature of the above filling material is 90 °C to 150 °C. Optionally, the softening point temperature of the above filling material is 94 °C to 146 °C, 94 °C to 142 °C, 94 °C to 138 °C, 94 °C to 134 °C, 94 °C to 130 °C, 104 °C to 146 °C, 104 °C to 142 °C, 104 °C to 138 °C, 104 °C to 134 °C, or 104 °C to 130 °C.

In some embodiments, in step 2, the volume distribution particle size Dv50 of the above filling material is less than or equal to 6 µm, optionally 1 µm to 6 µm, 1 µm to 5 µm, 2 µm to 5 µm, or 3 µm to 5 µm. Therefore, it is beneficial to filling the pore structure of the raw material with molten filling materials and to improving the dispersion uniformity of the filling materials and the raw material.

In some embodiments, in step 2, the coke yield of the above filling material is 15% to 40%, optionally 18% to 34%. In the present disclosure, the coke yield of the filling material has a meaning well known in the art and can be measured by instruments and methods known in the art. For example, the measurement may be performed with reference to GB/T 8727-2008.

In some embodiments, in step 2, the above filling material includes one or more of coal pitch, petroleum pitch, polymer compound, and resin, and optionally includes one or more of coal pitch and petroleum pitch.

In some embodiments, in step 2, the mass ratio of the above filling material to the above raw material is (10-40):100, optionally (10-30):100, (10-25):100, (10-20):100, (12-30):100, (14-28):100, or (15-25):100.

In step 2, by adjusting one or more parameters of the filling material such as the type, the softening point, the coke yield, and the addition amount within the above ranges, it is beneficial to adjusting the number and/or size of pores in the external region and the internal region of the second carbon-based material within an appropriate range, thereby facilitating the adjustment of S2/S1 of the second carbon-based material within an appropriate range.

By adjusting parameters such as the type, the softening point, the coke yield, and the addition amount of the filling material within the above ranges, the molten filling material has low viscosity and good fluidity and is less likely to bond the raw material particles, such that the agglomeration of the raw material particles in the subsequent preparation process can be reduced, thereby further reducing problems such as an increase in surface defects and an increase in surface active sites of the second carbon-based material particles due to the need to add a depolymerization process.

In some embodiments, in step 2, the heating process of heating a uniform mixture of the above raw material and the above filling material in a predetermined ratio to the first temperature T₁ may be a staged heating process.

In some embodiments, the above staged heating process includes a first heating process, a second heating process, and a third heating process.

In some embodiments, the above first heating process is to raise the temperature to 200 °C to 250 °C and hold the temperature for 0.5 h to 3 h.

In some embodiments, the above second heating process is to raise the temperature to 450 °C to 550 °C and hold the temperature for 0 h to 2 h. When the holding time is 0 h, it means that when the temperature is raised to a range of 450 °C to 550 °C, no holding process is conducted, and the temperature continues to be raised to the first temperature T₁.

In some embodiments, the above third heating process is to raise the temperature to the first temperature T₁ and hold the temperature for the first duration t₁.

In the staged heating process, the temperature is first raised to 200 °C to 250 °C. Since the heating temperature is higher than the softening point temperature of the filling material, in this case, the filling material melts and softens upon heating, and a holding time of 0.5 h to 3 h allows the filling material to flow and fill the pore structure of the raw material; when the temperature is raised to 450 °C to 550 °C, the molten and softened filling material undergoes a carbonization reaction and gradually forms a semi-coke state to become a viscous liquid or solid, thereby preventing the filling material from entering all of the pore structures of the raw material; finally, when the temperature is raised to the first temperature, the filling material undergoes a carbonization reaction, thereby enabling the pore structures occupied by the filling material to be effectively filled.

In some embodiments, in step 2, the temperature is raised to the above first temperature T1 at a rate of 1 °C/min to 10 °C/min. For example, the heating rate may be 1 °C/min, 2 °C/min, 3 °C/min, 4 °C/min, 5 °C/min, 6 °C/min, 7 °C/min, 8 °C/min, 9 °C/min, 10 °C/min, or in a range formed by any of the above values. Optionally, the heating rate is 1.5 °C/min to 8 °C/min, 1.5 °C/min to 6 °C/min, 2 °C/min to 6 °C/min, or 2 °C/min to 5 °C/min.

In some embodiments, the heating rate of the above first heating process may be 1 °C/min to 10 °C/min, optionally 1.5 °C/min to 8 °C/min, 1.5 °C/min to 6 °C/min, 2 °C/min to 6 °C/min, or 2 °C/min to 5 °C/min. In some embodiments, the heating rate of the above second heating process may be 1 °C/min to 10 °C/min, optionally 2 °C/min to 8 °C/min. In some embodiments, the heating rate of the above third heating process may be 1 °C/min to 10 °C/min, optionally 2 °C/min to 8 °C/min.

In some embodiments, in step 2, the above first temperature T₁ is 800 °C to 1200 °C. For example, the first temperature T₁ may be 800 °C, 850 °C, 900 °C, 950 °C, 1000 °C, 1050 °C, 1100 °C, 1200 °C, or in a range formed by any of the above values. Optionally, the above first temperature T₁ is 800 °C to 1100 °C, 850 °C to 1100 °C, 900 °C to 1100 °C, or 850 °C to 1000 °C.

In some embodiments, in step 2, the above first duration t₁ is 1 h to 5 h. For example, the first duration t₁ may be 1 h, 1.5 h, 2 h, 2.5 h, 3 h, 3.5 h, 4 h, 4.5 h, 5 h, or in a range formed by any of the above values. Optionally, the above first duration t₁ is 2 h to 4 h.

In some embodiments, in step 2, the thermal treatment may be performed in a medium-frequency furnace, a roller kiln, a rotary kiln, a pusher kiln, a vertical pellet mill, a horizontal pellet mill, a vertical reaction kettle, a horizontal reaction kettle, a drum furnace, or other temperature-programmable devices.

In some embodiments, in step 2, the thermal treatment atmosphere may be a protective gas atmosphere. The above protective gas may include one or more of nitrogen, argon, and helium.

In step 2, by adjusting one or more of the heating rate, the first temperature, the first duration, the heating process, and the like within the above ranges, it is beneficial to adjusting the number and/or size of pores in the external region and the internal region of the second carbon-based material within an appropriate range, thereby facilitating the adjustment of S₂/S₁ of the second carbon-based material within an appropriate range.

In some embodiments, in step 3, the above second temperature T₂ is 1600 °C to 2800 °C. Optionally, the above second temperature T₂ is 1600 °C to 2700 °C, 1600 °C to 2600 °C, 1600 °C to 2500 °C, 1600 °C to 2400 °C, 1800 °C to 2600 °C, 1800 °C to 2500 °C, 1800 °C to 2400 °C, 2000 °C to 2500 °C, or 2000 °C to 2400 °C.

In some embodiments, in step 3, the above second duration t₂ is 1.5 h to 6 h. For example, the second duration t₁ may be 2 h, 2.5 h, 3 h, 3.5 h, 4 h, 4.5 h, 5 h, 5.5 h, 6 h, or in a range formed by any of the above values. Optionally, the above second duration t2 is 2 h to 5 h.

In some embodiments, in step 3, the above thermal treatment may be performed in a medium-frequency furnace, a box-type graphitization furnace, an Acheson graphitization furnace, a continuous graphitization furnace, or an internal series graphitization furnace.

In some embodiments, in step 3, the medium-frequency furnace and the continuous graphitization thermal treatment atmosphere may be a protective gas atmosphere. The above protective gas may include one or more of nitrogen, argon, and helium.

In step 3, by adjusting one or more of the second temperature and the second duration within the above ranges, it is beneficial to adjusting the content of disordered carbon in the second carbon-based material within an appropriate range, thereby facilitating the second carbon-based material to achieve an appropriate degree of graphitization, appropriate interlayer spacing, appropriate I_{D}/I_{G}, and the like.

In the above preparation method for the second carbon-based material, by adjusting one or more of the parameters of the natural graphite, the parameters of the filling material, the heating rate, the first temperature, the first duration, the heating process, the second temperature, the second duration, and the like within the above ranges, it is beneficial to adjusting the parameters of the second carbon-based material, such as S₂/S₁, degree of graphitization, specific capacity, specific surface area, particle size, powder compaction density, and tap density.

According to some embodiments, the second carbon-based material may be provided with a coating layer. The preparation method further includes step 4: mixing the second carbon-based material prepared above with an organic carbon source and performing carbonization at a third temperature T3. The organic carbon source may be a carbon-containing material known in the art that is suitable for coating, and may include, for example, one or more of coal pitch, petroleum pitch, phenolic resin, coconut shell, and the like. In some embodiments, the second carbon-based material mixed with the organic carbon source is carbonized by holding the second carbon-based material at a third temperature T3 of 1150 °C to 1500°C for 1 h to 3 h, to obtain the second carbon-based material in which at least part of the surface is provided with a carbon coating layer.

### [Positive Electrode Plate]

The positive electrode plate includes a positive electrode current collector and a positive electrode film layer disposed on at least one surface of the positive electrode current collector, and the positive electrode film layer includes the positive electrode active material according to the first aspect of the present disclosure.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), and polyethylene (PE)).

In some embodiments, when the battery cell is a lithium-ion battery, a positive electrode active material for use in lithium-ion batteries well known in the art may be used as the positive electrode active material. As an example, the positive electrode active material may include at least one of the following materials: a lithium-containing phosphate with an olivine structure, a lithium transition metal oxide, and respective modified compounds thereof. However, the present disclosure is not limited to these materials, and other conventional materials that can be used as the positive electrode active material in batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, when the battery cell is a sodium-ion battery, a positive electrode active material for use in sodium-ion batteries well known in the art may be used as the positive electrode active material. As an example, the positive electrode active material may include at least one of the following materials: a sodium transition metal oxide, a polyanionic compound, and a Prussian blue compound.

As Li undergoes deintercalation and consumption in the charging and discharging process of the battery, the molar content of Li varies when the battery is discharged to different states. In the examples of the positive electrode material listed in the present disclosure, the molar content of Li is in an initial state of the material, that is, a state before the material is added, and when the positive electrode material is applied to a battery system, the molar content of Li may vary after charging and discharging cycles.

In the examples of the positive electrode material in the present disclosure, the molar content of O is only a theoretical value. The molar content of oxygen may vary due to oxygen release from the crystal lattice, and actually, the molar content of O will fluctuate.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

### [Electrolyte]

The electrolyte functions to conduct ions between the positive electrode plate and the negative electrode plate. The present disclosure does not particularly limit the type of the electrolyte, which may be selected according to needs. For example, the electrolyte may be liquid, gel, or all solid.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

### [Separator]

In some embodiments, the battery cell further includes a separator. The present disclosure does not particularly limit the type of the separator, and any porous-structure separator known to have good chemical stability and mechanical stability may be selected.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the positive electrode plate, the negative electrode plate, and the separator may be manufactured into an electrode assembly through a winding process or a stacking process.

In some embodiments, the battery cell may include an outer packaging. The outer packaging can be used for packaging the electrode assembly and electrolyte described above.

In some embodiments, the outer packaging of the battery cell may be a hard shell, such as a hard plastic shell, an aluminum shell, or a steel shell. The outer packaging of the battery cell may also be a soft pack, such as a pouch-type soft pack. The soft pack may be made of plastic, and examples of the plastic may include polypropylene, polybutylene terephthalate, polybutylene succinate, and the like.

The present disclosure does not particularly limit the shape of the battery cell, and it may have a cylindrical shape, a prismatic shape, or any other shape. For example, FIG. 6 shows a battery cell 5 having a prismatic structure as one example.

In some embodiments, referring to FIG. 7, the outer packaging may include a housing 51 and a top cover assembly 53. The housing 51 may include a bottom plate and side plates connected to the bottom plate, and the bottom plate and the side plates define, in an enclosing manner, an accommodating cavity. The housing 51 is provided with an opening in communication with the accommodating cavity, and the top cover assembly 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assemblies 52 included in the battery cell 5 may be one or more, and those skilled in the art can select the number according to specific and actual needs.

In some embodiments, the battery cell may be assembled into a battery module. The number of battery cells included in the battery module may be one or more, and the specific number may be selected by those skilled in the art based on the use and capacity of the battery module.

FIG. 8 shows a battery module 4 as one example. Referring to FIG. 8, in the battery module 4, a plurality of battery cells 5 may be sequentially disposed in the length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some embodiments, the battery module described above may also be assembled into a battery pack. The number of battery modules included in the battery pack may be one or more, and the specific number may be selected by those skilled in the art based on the use and capacity of the battery pack.

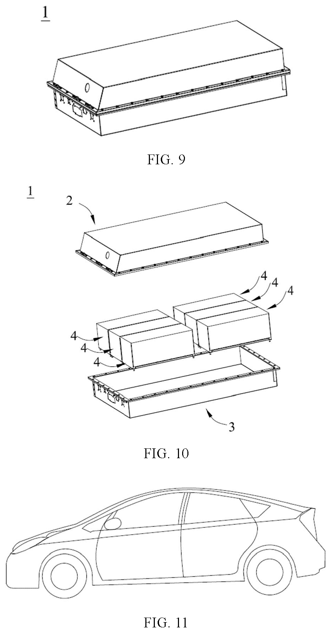

FIGs. 9 and 10 show a battery pack 1 as one example. Referring to FIGs. 9 and 10, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In addition, a second aspect of the present disclosure further provides an electric device. The electric device includes the secondary battery according to the present disclosure. The secondary battery may be used as a power source for the electric device, or as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, a ship, or a satellite, an energy storage system, or the like.

A battery cell, a battery module, or a battery pack may be selected based on the use requirements of the electric device.

FIG. 11 shows an electric device as one example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a battery cell can thus be used as a power source.

### Examples

The examples of the present disclosure are illustrated hereinafter. The examples described below are illustrative and are merely used to explain the present disclosure, and they should not be construed as limiting the present disclosure. The examples without techniques or conditions specified therein are implemented according to techniques or conditions described in the literature in the art or according to product instructions. Reagents or instruments used herein without specified manufacturers are all commercially available conventional products.

The materials used in the examples and comparative examples of the present disclosure may be commercially available, or may be prepared by the following process.

### Preparation of material 1-1:

Natural spherical graphite was provided and mixed uniformly with petroleum pitch having a softening point of 250 °C in a mass ratio of 100:10. A low-temperature thermal treatment at 1120 °C was performed for 2 h to obtain a natural graphite with a carbon coating layer, i.e., material 1-1, serving as the first carbon-based material. Material 1-1 satisfied: the volume distribution particle size Dv50 = 17.5 µm, the specific surface area BET = 1.96 m²/g, the degree of graphitization = 96.0%, and the specific capacity = 366.5 mAh/g.

### Preparation of materials 1-2 to 1-4:

The preparation methods for materials 1-2 to1-4 were similar to the preparation method for material 1-1, except that: the particle size of the spherical natural graphite was different from that of material 1-1, such that the volume distribution particle sizes Dv50 of materials 1-1 to 1-4 were within the range of 16 µm to 22 µm. Details are as follows:

**Table 1.**

| Material number | Volume distribution particle size of raw material Dv50 (µm) | Volume distribution particle size of first carbon-based material Dv50 (µm) |
|---|---|---|
| 1-1 | 17.2 | 17.5 |
| 1-2 | 15.5 | 16.3 |
| 1-3 | 19.5 | 20.5 |
| 1-4 | 21.0 | 22.0 |

### Preparation of materials 1-5 and 1-6:

The preparation methods for materials 1-5 and 1-6 were similar to the preparation method for material 1-1, except that: the carbonization temperature was adjusted according to the table below, such that the degrees of graphitization of materials 1-5 and 1-6 were within the range of 95% to 98%. Details are as follows:

**Table 2.**

| Material number | Carbonization temperature | Degree of graphitization of first carbon-based material |
|---|---|---|
| 1-5 | 900 °C | 95.0% |
| 1-6 | 1200 °C | 97.5% |

### Preparation of material 2-1:

The flake graphite was mechanically crushed, classified, spheroidized, and purified to obtain natural spherical graphite. The natural spherical graphite had a volume distribution particle size Dv50 = 10.5 µm. The obtained natural spherical graphite and a filler petroleum pitch having a softening point of 115 °C were mixed in a mass ratio of 100:22. The mixed material was then placed in a temperature-programmable device, then continuously heated to 650 °C (first treatment temperature) and held for 2 h, and cooled to room temperature to obtain an intermediate. The obtained intermediate was placed in a graphitization furnace and subjected to a thermal treatment at 2390 °C (second treatment temperature), and then subjected to demagnetization and sieving. The obtained material was mixed with petroleum pitch and subjected to thermal treatment at 1150 °C for 2.5 h, to obtain material 2-1 serving as the second carbon-based material. Material 2-1 satisfied: S2/S1 = 8.1, the volume distribution particle size Dv50 = 11.2 µm, and the degree of graphitization = 96.5%.

### Preparation of materials 2-2 to 2-5:

The preparation methods for materials 2-2 to 2-5 were similar to the preparation method for material 2-1, except that: the mass ratio of natural spherical graphite to the filler and the first treatment temperature were adjusted according to the table below, so as to obtain materials 2-2 to 2-5. Details are as follows:

**Table 3.**

| Material number | Mass ratio of natural spherical graphite to filler | First treatment temperature (°C) | S2/S1 of second carbon-based material |
|---|---|---|---|
| 2-1 | 100:22 | 600 | 8.1 |
| 2-2 | 100:20 | 620 | 2.4 |
| 2-3 | 100:26 | 550 | 198.2 |
| 2-4 | 100:30 | 380 | 399.6 |
| 2-5 | 100:36 | 320 | 448.7 |

### Preparation of material 2-6:

The preparation method for material 2-6 was similar to the preparation method for material 1, except that: the ratio of natural spherical graphite to the filler was adjusted to 100:7, and the first treatment temperature T1 was adjusted to 1200 °C, such that S2/S1 of the material = 0.82.

### Preparation of materials 2-7 to 2-9:

The preparation methods for materials 2-7 to 2-9 were similar to the preparation method for material 1, except that: the volume distribution particle size Dv50 of the above raw material natural spherical graphite was adjusted within the range of 5.5 µm to 11 µm, such that the volume distribution particle sizes Dv50 of materials 2-7 to 2-9 were within the range of 6 µm to 12 µm. Details are as follows:

**Table 4.**

| Material number | Raw material Dv50 (µm) | Second carbon-based material Dv50 (µm) |
|---|---|---|
| 2-7 | 5.5 | 6.2 |
| 2-8 | 8.0 | 8.7 |
| 2-9 | 11.0 | 12.0 |

### Preparation of materials 2-10 and 2-11:

The preparation methods for materials 2-10 and 2-11 were similar to the preparation method for material 2-1, except that: the second treatment temperature and the mass ratio of natural spherical graphite to the filler were adjusted according to the table below, such that the degrees of graphitization of materials 2-10 and 2-11 were within the range of 95.5% to 98.0%. Details are as follows:

**Table 5.**

| Material number | Second treatment temperature | Mass ratio of natural spherical graphite to filler | Degree of graphitization of second carbon-based material (%) |
|---|---|---|---|
| 2-10 | 2390 | 100:26 | 95.5 |
| 2-11 | 2590 | 100:20 | 98.0 |

### Example 1

### Preparation of secondary battery:

1. Negative electrode plate: A first negative electrode active material (material 1-1, used as the first carbon-based material) and a second negative electrode active material (material 2-1, used as the second carbon-based material) were stirred and mixed thoroughly with a conductive agent carbon black (Super P), a thickener sodium carboxymethylcellulose, and a binder styrene-butadiene rubber in an appropriate amount of solvent deionized water in a weight ratio of 96.4:1:1.2:1.4, to form a first negative electrode slurry and a second. The first negative electrode slurry and the second negative electrode slurry were sequentially applied on two surfaces of a negative electrode current collector copper foil in an equal mass ratio, and the copper foil was then subjected to drying and cold pressing to obtain the negative electrode plate.
2. Positive electrode plate: LiNi_{0.5}Co_{0.2}Mn_{0.3}O₂ (NCM523), a conductive agent carbon black (Super P), and a binder polyvinylidene fluoride were mixed in a weight ratio of 96:2:2, and an appropriate amount of solvent N-methylpyrrolidone (NMP) was added. The mixture was stirred uniformly to obtain a positive electrode slurry. The positive electrode slurry was applied on two surfaces of a positive electrode current collector aluminum foil, and the aluminum foil was then subjected to drying and cold pressing to obtain the positive electrode plate.
3. Electrolytic solution: Ethylene carbonate (EC), ethyl methyl carbonate (EMC), and diethyl carbonate (DEC) were mixed in a volume ratio of 1:1:1 to obtain an organic solvent. Then, LiPF₆ was dissolved in the above organic solvent to prepare an electrolytic solution with a concentration of 1 mol/L.
4. Separator: A polypropylene film was used.
5. Preparation of secondary battery: The positive electrode plate and the negative electrode plate prepared above were stacked in sequence to enable the separator to be disposed between the positive electrode plate and the negative electrode plate for isolation, and then the stack was wound to obtain an electrode assembly. The electrode assembly was placed in an outer packaging and dried, and then the electrolytic solution was injected. After undergoing processes such as vacuum packaging, standing, formation, and shaping, a secondary battery was obtained.

### Examples 2 to 5

The battery preparation methods of Examples 2 to 5 were similar to the battery preparation method of Example 1, except that: different materials 2-2 to 2-5 were selected for the second carbon-based material, as detailed in Table 8.

### Comparative Example 1

A secondary battery was assembled using a preparation method similar to that of Example 1, except that: material 2-6 with S2 less than S1 was selected for the second carbon-based material, as detailed in Table 8.

### Performance Test

### 1. Material test

S2/S1 of the second carbon-based material was measured by the following method.

The binder for sample preparation was mixed uniformly with the second carbon-based material powder and then applied on a copper foil, and the copper foil was dried at 60 °C for 30 min for later use. Five samples to be measured with a size of 6 mm × 6 mm were cut from five different positions and separately pasted on a sample stage of a CP argon ion cross-section polisher. The samples were cut using a plasma beam to obtain the cross-sections of each sample. The test instrument might be the IB-09010 CP argon ion cross-section polisher from JEOL Ltd., Japan.

A scanning electron microscope was used to scan the cross-sections of the sample of the first carbon-based material, and scanning images were acquired from randomly selected regions of the sample cross-sections. For the test, reference might be made to JY/T010-1996. The test instrument might be the Sigma 300 scanning electron microscope from ZEISS, Germany.

Cross-sections of 20 particles of the first carbon-based material were randomly selected from the scanning images. The region extending from the surface of the particle of the first carbon-based material to the interior of the particle by a distance of 0.25 µm was denoted as the external region, and the region at the inner side of the external region was denoted as the internal region. The total pore area S1' of the external region of each particle cross-section and the pore area S2' of the internal region of the first carbon-based material were acquired using image processing software, and the value of S2'/S1' was calculated. The arithmetic mean value of S2'/S1' for all 20 particles was calculated as the S2/S1 value of the first carbon-based material. The image processing software might be AVIZO.

### 2. Second carbon-based material morphology test

The negative electrode plates in the above examples and comparative examples were used and cut into samples to be tested of 2 cm × 2 cm, and the samples to be tested were fixed on a sample stage using paraffin. The sample stage was placed into a sample holder and locked in place, and an argon ion cross-section polisher (the IB-09010 CP argon ion cross-section polisher from JEOL Ltd., Japan) was turned on and evacuated to 10⁻⁴ Pa. After setting the argon flow to 0.15 MPa, the voltage to 8 KV, and the polishing time to 2 h, the sample stage was adjusted to an oscillation mode to begin polishing. A region of the sample to be tested was randomly selected for scanning (with reference to JY/T010-1996 under a scanning electron microscope (Sigma 300 from ZEISS), and the ion-polished cross-sectional morphology (CP) image of the second carbon-based material was acquired at 1000-fold magnification, as shown in FIG. 4. As can be observed from FIG. 4, the second carbon-based material has a certain number of pores at the position proximal to the center of the particle, while the region proximal to the surface of the particle exhibits a relatively dense structure.

### 3. Battery performance test

### (1) Kinetic performance test of secondary battery

At 25 °C, the secondary batteries prepared in the examples and comparative examples were fully charged at a constant current of xC (an initial charging rate that does not cause lithium plating on the surface of the negative electrode plate can be determined empirically, such as 1.5C), and then fully discharged at 1C. After this process was repeated ten times, the batteries were fully charged at xC, and then the negative electrode plates were disassembled, and the lithium plating on the surface of the negative electrode plates was observed. If no lithium plating was observed on the surface of the negative electrode plate, the charging rate xC was increased stepwise in increments of 0.05C, and the test was repeated until lithium plating was observed on the surface of the negative electrode plate. The test was then terminated, and the charging rate of (x - 0.05)×C was defined as the maximum charging rate of the battery.

### (2) Energy density test

At 25 °C, the secondary battery was charged at a constant current of 1/3C to 4.25 V, then charged at a constant voltage of 4.25 V to a current of 0.05C, left to stand for 5 min, and then discharged at a constant current of 1/3C to 2.8 V. The discharge energy of the battery at this point was recorded. The discharge energy of the battery divided by the mass of the battery was defined as the mass energy density of the battery, expressed in Wh/kg.

### (3) Cycle performance test of secondary battery

At 45 °C, the secondary batteries prepared above were charged at a constant current of 1C to the upper-limit cut-off voltage (corresponding to 100% SOC), and then charged at a constant voltage to a current of 0.05C. After being left to stand for 5 min, the secondary batteries were discharged at a constant current of 1C to the lower-limit cut-off voltage (corresponding to 0% SOC). The discharge capacity at this point was recorded as the discharge capacity of the first cycle. The secondary batteries were subjected to a cyclic charging and discharging test according to the above method, and the discharge capacity after each cycle was recorded. 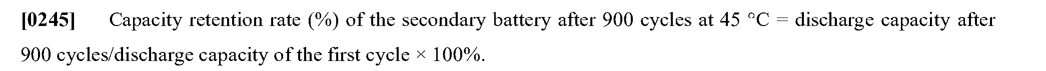 Capacity retention rate (%) of the secondary battery after 900 cycles at 45 °C = discharge capacity after 900 cycles/discharge capacity of the first cycle × 100%.

The test results of the secondary batteries prepared in Examples 1 to 5 and Comparative Example 1 are shown in Table 6 below.

**Table 6.**

| Serial number | **First carbon-based material** | **Second carbon-based material** | | **Performance of secondary battery** | |
|---|---|---|---|---|---|
| | Material number | Material number | S2/S1 | Energy density (Wh/kg) | Capacity retention rate at 45 °C/900 cycles (%) |
| Example 1 | 1-1 | 2-1 | 8.1 | 236.8 | 87.8 |
| Example 2 | 1-1 | 2-2 | 2.4 | 238.6 | 86.5 |
| Example 3 | 1-1 | 2-3 | 198.2 | 235.8 | 88.7 |
| Example 4 | 1-1 | 2-4 | 399.6 | 237.5 | 89.1 |
| Example 5 | 1-1 | 2-5 | 448.7 | 236.5 | 89.7 |
| Comparative Example 1 | 1-1 | 2-6 | 0.82 | 233.7 | 78.5 |

As can be seen from Table 6 above, as the S2/S1 value gradually increases, the charging rate of the secondary battery gradually decreases, the cycle retention rate gradually increases, and the influence on the energy density is relatively small. A smaller S2/S1 value indicates more pore structures on the surface of the material, thereby increasing the consumption of active lithium accordingly and slightly deteriorating the cycle performance. However, when the value of S2/S1 is excessively small (Comparative Example 1), indicating that the surface has abundant pore structures, side reactions are significantly increased, thereby significantly deteriorating the cycle performance.

### Examples 6 to 8

The battery preparation methods of Examples 6 to 8 were similar to the battery preparation method of Example 1, except that: different materials 1-2 to 1-4 were selected for the first carbon-based material.

### Examples 9 to 11

The battery preparation methods of Examples 9 to 11 were similar to the battery preparation method of Example 1, except that: different materials 2-7 to 2-9 were selected for the second carbon-based material.

The material parameters and test results of the secondary batteries prepared in Examples 1 and 6 to 11 are shown in Table 7 below.

**Table 7.**

| Serial number | **First carbon-based material** | | **Second carbon-based material** | | **Performance of secondary battery** | | |
|---|---|---|---|---|---|---|---|
| | Material number | Dv50 (µm) | Material number | Dv50 (µm) | Maximum charging rate | Energy density (mAh/g) | Capacity retention rate at 45 °C/900 cycles |
| Example 1 | 1-1 | 17.5 | 2-1 | 11.2 | 1.65C | 236.8 | 87.8 |
| Example 6 | 1-2 | 16.3 | 2-1 | 11.2 | 1.70C | 232.5 | 87.2 |
| Example 7 | 1-3 | 20.5 | 2-1 | 11.2 | 1.60C | 237.6 | 88.3 |
| Example 8 | 1-4 | 22.0 | 2-1 | 11.2 | 1.45C | 238.2 | 88.5 |
| Example 9 | 1-1 | 17.5 | 2-7 | 6.2 | 1.75C | 232.7 | 86.9 |
| Example 10 | 1-1 | 17.5 | 2-8 | 8.7 | 1.70C | 233.6 | 87.3 |
| Example 11 | 1-1 | 17.5 | 2-9 | 12.0 | 1.45C | 237.3 | 88.2 |

As can be seen from Table 7 above, as the particle size of the first carbon-based material or the second carbon-based material gradually increases, the energy density of the secondary battery gradually increases, the cycle retention rate is slightly improved, while the kinetic performance is deteriorated. When the particle size increases, both the specific capacity and the powder compaction density of the material are improved to a certain extent, and the consumption of lithium ions is reduced, such that the energy density and cycle performance of the secondary battery are improved. However, when the particle size is relatively large, the migration and diffusion of lithium ions are adversely affected, and the kinetic performance of the secondary battery is affected.

### Examples 12 and 13

The battery preparation methods of Examples 12 and 13 were similar to the battery preparation method of Example 1, except that: different materials 1-5 and 1-6 were selected for the first carbon-based material.

### Examples 14 and 15

The battery preparation methods of Examples 14 and 15 were similar to the battery preparation method of Example 1, except that: different materials 2-10 and 2-11 were selected for the second carbon-based material.

The material parameters and test results of the secondary batteries prepared in Examples 1 and 12 to 15 are shown in Table 8 below.

**Table 8.**

| Serial number | **First carbon-based material** | | **Second carbon-based material** | | **Performance of secondary battery** | | |
|---|---|---|---|---|---|---|---|
| | Material number | Degree of graphitization (%) | Material number | Degree of graphitization (%) | Maximum charging rate | Energy density (mAh/g) | Capacity retention rate at 45 °C/900 cycles (%) |
| Example 1 | 1-1 | 96.0 | 2-1 | 96.5 | 1.65C | 236.8 | 87.8 |
| Example 12 | 1-5 | 95.0 | 2-1 | 96.5 | 1.65C | 229.5 | 88.1 |
| Example 13 | 1-6 | 97.5 | 2-1 | 96.5 | 1.60C | 238.7 | 87.6 |
| Example 14 | 1-1 | 96.0 | 2-10 | 95.5 | 1.65C | 226.7 | 88.3 |
| Example 15 | 1-1 | 96.0 | 2-11 | 98.0 | 1.60C | 239.6 | 87.4 |

As can be seen from Table 8 above, the change in the degree of graphitization mainly affects the energy density of the secondary battery, and has little influence on the kinetic performance and the cycling stability. The higher the degree of graphitization, the higher the specific capacity and the higher the powder compaction density of the material, and therefore, the higher the energy density of the cell.

It should be noted that the present disclosure is not limited to the embodiments described above. The embodiments described above are merely illustrative, and any embodiments having a structure substantially identical to the technical concept and exerting the same functional effects within the scope of the technical solutions of the present disclosure are all included within the technical scope of the present disclosure. Furthermore, without departing from the spirit of the present disclosure, various modifications that can be conceived by those skilled in the art to the embodiments, as well as other embodiments formed by combining some of the constituent elements of the embodiments, are also included within the scope of the present disclosure.

## Claims

1. A secondary battery, comprising a negative electrode plate, wherein the negative electrode plate comprises a negative electrode current collector and a negative electrode film layer located on at least one surface of the negative electrode current collector,
the negative electrode film layer has a first surface distal to the negative electrode current collector and a second surface disposed opposite to the first surface, and a thickness of the negative electrode film layer is denoted as H,
wherein, a region extending from the second surface of the negative electrode film layer to a thickness range of 0.3 H is denoted as a first region of the negative electrode film layer, the first region is proximal to a surface of the negative electrode current collector and comprises a first negative electrode active material, and the first negative electrode active material comprises a first carbon-based material;
a region extending from the first surface of the negative electrode film layer to the thickness range of 0.3 H is denoted as a second region of the negative electrode film layer, the second region is distal to a surface of the negative electrode current collector and comprises a second negative electrode active material, and the second negative electrode active material comprises a second carbon-based material;
the first carbon-based material comprises natural graphite; and
the second carbon-based material comprises an external region and an internal region located at the inner side of the external region, the external region refers to a region formed by extending from a surface of a particle of the second carbon-based material to an interior of the particle by a distance of 2.5 µm, in a cross-sectional view of the second carbon-based material, a total pore area of the external region is denoted as S1, a total pore area of the internal region is denoted as S2, and the second carbon-based material satisfies S2 > S1.

2. The secondary battery according to claim 1, wherein a volume distribution particle size Dv50 of the first carbon-based material is greater than a volume distribution particle size Dv50 of the second carbon-based material.

3. The secondary battery according to claim 1 or 2, wherein the volume distribution particle size Dv50 of the first carbon-based material is ≥ 15 µm, optionally 16 µm to 20 µm.

4. The secondary battery according to any one of claims 1 to 3, wherein the volume distribution particle size Dv50 of the second carbon-based material is ≤ 13 µm, optionally 7 µm to 12 µm.

5. The secondary battery according to any one of claims 1 to 4, wherein at least part of a surface of the first carbon-based material is provided with a coating layer; and/or at least part of a surface of the second carbon-based material is provided with a coating layer.

6. The secondary battery according to any one of claims 1 to 5, wherein a degree of graphitization of the first carbon-based material is ≥ 95%, optionally 95.0% to 98.0%; and/or
a degree of graphitization of the second carbon-based material is ≥ 95%, and the degree of graphitization of the second carbon-based material is 95.5% to 98.5%.

7. The secondary battery according to any one of claims 1 to 6, wherein the degree of graphitization of the first carbon-based material is less than the degree of graphitization of the second carbon-based material.

8. The secondary battery according to any one of claims 1 to 7, wherein the second carbon-based material satisfies 1.5 ≤ S2/S1 ≤ 500, optionally, 2.4 ≤ S2/S1 ≤ 450.

9. The secondary battery according to any one of claims 1 to 8, wherein
a specific surface area of the first carbon-based material is greater than a specific surface area of the second carbon-based material;
optionally, the specific surface area of the first carbon-based material is ≤ 2.2 m²/g, more optionally 1.8 m²/g to 2.2 m²/g; and/or
optionally, the specific surface area of the second carbon-based material is ≤ 2.1 m²/g, more optionally 1.3 m²/g to 2.0 m²/g.

10. The secondary battery according to any one of claims 1 to 9, wherein a mass proportion of the second carbon-based material in the negative electrode active material is ≥ 30%, optionally 50% to 70%.

11. The secondary battery according to any one of claims 1 to 10, wherein a specific capacity of the first carbon-based material is ≥ 355 mAh/g, optionally 358 mAh/g to 367 mAh/g.

12. The secondary battery according to any one of claims 1 to 11, wherein the second carbon-based material satisfies at least one of the following:
(1) a volume distribution particle size Dv90 of the second carbon-based material being ≤ 25 µm, optionally 18 µm to 25 µm;
(2) the second carbon-based material satisfying: [(Dv90)-(Dv10)]/(Dv50)] ≤ 1.30, optionally 1.05 to 1.25;
(3) a specific capacity of the second carbon-based material being ≥ 358 mAh/g, optionally 360 mAh/g to 370 mAh/g;
(4) an area of a pore structure in the external region of the second carbon-based material being less than or equal to 0.15 µm², optionally less than or equal to 0.13 µm²; and
(5) the internal region of the second carbon-based material comprising one or more pore structures with an area greater than or equal to 0.15 µm², and optionally comprising one or more pore structures with an area of 0.15 µm² to 2.0 µm².

13. The secondary battery according to any one of claims 1 to 12, wherein the first negative electrode active material and/or the second negative electrode active material further comprises a silicon-based material;
optionally, a mass proportion of the silicon-based material in the first negative electrode active material is ≤ 10 %wt%;
optionally, a mass proportion of the silicon-based material in the second negative electrode active material is ≤ 10 wt%; and
optionally, the mass proportion of the silicon-based material in the first negative electrode active material is greater than the mass proportion of the silicon-based material in the second negative electrode active material.

14. The secondary battery according to any one of claims 1 to 13, wherein the negative electrode film layer satisfies at least one of the following:
(1) a compaction density of the negative electrode film layer being ≤ 1.85 g/cm³, optionally 1.55 g/cm³ to 1.85 g/cm³;
(2) an areal density of the negative electrode film layer being ≥ 6.0 mg/cm², optionally 7.0 mg/cm² to 15.0 mg/cm²;
(3) a porosity of the negative electrode film layer being 18.0% to 36.7%, optionally 19.0% to 34.0%; and
(4) a thickness of the negative electrode film layer being ≥ 60 µm, optionally 70 µm to 130 µm.

15. An electric device, comprising the secondary battery according to any one of claims 1 to 14.
